# FASCICULE DE BREVET EUROPEEN

(11) **EP 2 474 357 B1**
(45) Date de publication et mention de la délivrance du brevet: **05.09.2018**
(21) Numéro de dépôt: 11290585.6
(22) Date de dépôt: 20.12.2011
(51) Int. Cl.: B01J 29/14, B01J 29/16, B01J 35/00, B01J 35/10, B01J 37/20, C10G 47/20, C10G 45/08, C10G 45/12, C10G 65/12

(54) **Procédé de préparation d'un catalyseur zéolithique d'hydrocraquage contenant deux fonctions hydrogénantes distinctes**
Verfahren zur Herstellung eines Hydrocracking-Zeolith- Katalysators enthaltend zwei separate Hydrierungsfunktionen
Process of preparation of a hydrocracking zeolite catalyst containing two separate hydrogenating functions

(30) Priorité: 07.01.2011 FR 1100043
(43) Date de publication de la demande: 11.07.2012
(73) Titulaire: IFP Energies nouvelles, 92500 Rueil-Malmaison (FR)
(72) Inventeur: Francis, Jeremy, 69008 Lyon (FR); Simon, Laurent, 69100 Villeurbanne (FR); Guillon, Emmanuelle, 69390 Vourles (FR); Bats, Nicolas, 69360 Saint Symphorien D'Ozon (FR); Corma, Avelino, 46022 Valencia (ES); Pichon, Christophe, Lyon (FR)

(56) Documents cités:
- EP-A1- 0 911 077
- DE-A1- 3 818 294
- US-A- 3 536 605
- US-A- 3 875 081
- US-A- 5 954 946
- US-A1- 2007 102 321
- G NIU: "NO adsorption study on the distribution of nickel ions on the mixed carriers of USY zeolite and [gamma]-Al2O3", APPLIED SURFACE SCIENCE, vol. 141, no. 1-2, 1 mars 1999 (1999-03-01), pages 35-42, XP055004954, ISSN: 0169-4332, DOI: 10.1016/S0169-4332(98)00604-7
- SAKDINUN NUNTANG ET AL: "Comparative Study on Adsorptive Removal of Thiophenic Sulfurs over Y and USY Zeolites", INDUSTRIAL & ENGINEERING CHEMISTRY RESEARCH, vol. 47, no. 19, 1 octobre 2008 (2008-10-01), pages 7405-7413, XP055004959, ISSN: 0888-5885, DOI: 10.1021/ie701785s
- DA-SONG LIU ET AL: "STRUCTURAL EVOLUTION OF DEALUMINATED Y ZEOLITES DURING KOH SOLUTION TREATMENT", ZEOLITES, ELSEVIER SCIENCE PUBLISHING, US, vol. 18, 31 décembre 1997 (1997-12-31), pages 162-170, XP002624367, ISSN: 0144-2449

## Description

### Domaine technique

La présente invention concerne un procédé de préparation d'un catalyseur zéolithique comprenant au moins une matrice minérale poreuse et au moins une zéolithe Y désaluminée (USY) présentant des caractéristiques texturales particulières, ledit catalyseur comprenant deux phases actives hydrogénantes distinctes. Ladite zéolithe Y désaluminée (USY) présentant des caractéristiques texturales particulières comprend dans son réseau poreux une première phase active hydrogénante constituée d'une quantité de nickel comprise entre 0,8 et 3% poids par rapport à la masse totale de la zéolithe. Par ailleurs, ledit catalyseur présente également une deuxième phase active hydrogénante déposée sur le support ou contenue dans la matrice minérale poreuse, constituant du support. La deuxième phase active hydrogénante comprend au moins un élément hydro-déshydogénant choisi dans le groupe formé par les éléments du groupe VIB et du groupe VIII non noble, pris seul ou en mélange, de la classification périodique.
En particulier, la divulgation concerne un procédé d'hydrocraquage et/ou d'hydrotraitement de charges hydrocarbonées mettant en oeuvre un catalyseur comprenant au moins un élément hydro-déshydogénant choisi dans le groupe formé par les éléments du groupe VIB et du groupe VIII non noble pris seul ou en mélange de la classification périodique, et un support comprenant au moins une matrice minérale poreuse et au moins une zéolithe Y désaluminée USY présentant un rapport atomique global de silicium sur aluminium compris entre 2,5 et 10, une fraction pondérale d'atome d'aluminium extra réseau supérieure à 20% par rapport à la masse totale de l'aluminium présent dans la zéolithe, un volume mésoporeux mesuré par porosimétrie à l'azote supérieur à 0,07 ml.g⁻¹, et un parametre cristallin a₀ de la maille élémentaire supérieur à 24,28 Å, dans lequel une quantité d'élément nickel comprise entre 0,8 et 3% poids par rapport à la masse totale de la zéolithe est déposée sur ladite zéolithe USY et dans lequel ledit catalyseur est sous forme sulfurée.
La divulgation concerne l'hydrocraquage et/ou d'hydrotraitement de charges hydrocarbonées contenant par exemple des composés aromatiques, et/ou oléfiniques, et/ou naphténiques, et/ou paraffiniques à l'exclusion des charges issues du procédé Fischer-Tropsch et contenant éventuellement des métaux, et/ou de l'azote, et/ou de l'oxygène et/ou du soufre. La présente invention concerne donc la préparation d'un catalyseur zéolithique comprenant au moins une matrice minérale poreuse et au moins une zéolithe Y désaluminée (USY) présentant des caractéristiques texturales particulières, ledit catalyseur comprenant deux phases actives hydrogénantes distinctes.

L'objectif du procédé d'hydrocraquage est essentiellement la production de distillats moyens, c'est-à-dire d'une coupe kérosène ayant un point d'ébullition compris entre 150 et 250°C, et d'une coupe gazole ayant un point d'ébullition compris entre 250 et 380°C.

### Art Antérieur

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports acides dont les surfaces varient généralement de 150 à 800 m².g⁻¹ telles que les alumines halogénées (chlorées ou fluorées notamment), les combinaisons d'oxydes de bore et d'aluminium, et plus souvent les silice-alumine amorphes et les zéolithes en combinaison avec un liant généralement aluminique. La fonction hydrogénante est apportée soit par un ou plusieurs métaux du groupe VIB de la classification périodique des éléments, soit par une association d'au moins un métal du groupe VIB de la classification périodique et au moins un métal du groupe VIII déposé sur le support.

La bi-fonctionnalité du catalyseur, c'est-à-dire le rapport, la force et la distance entre les fonctions acides et hydrogénante est un paramètre clé connu de l'homme de l'art pour influencer l'activité et la sélectivité du catalyseur. Une fonction acide faible et une fonction hydrogénante forte donnent des catalyseurs peu actifs, travaillant à température en général élevée (supérieure ou égale à 390-400°C), et à vitesse spatiale d'alimentation faible (la WH exprimée en volume de charge à traiter par unité de volume de catalyseur et par heure est généralement inférieure ou égale à 2), mais dotés d'une très bonne sélectivité en distillats moyens (kérosène et gazoles). Inversement, une fonction acide forte et une fonction hydrogénante faible donnent des catalyseurs actifs, mais présentant de moins bonnes sélectivités en distillats moyens.

Un type de catalyseurs conventionnels d'hydrocraquage est à base de supports amorphes modérément acides, tels les silice-alumines par exemple. Ces systèmes sont utilisés pour produire des distillats moyens de bonne qualité, et éventuellement, des bases huiles. Ces catalyseurs sont par exemple utilisés dans les procédés en une étape. L'inconvénient de ces catalyseurs à base de support amorphe est leur faible activité.

Les catalyseurs comportant par exemple de la zéolithe Y de type structural FAU présentent quant à eux une activité catalytique supérieure à celle des silice-alumines, mais présentent des sélectivités en distillats moyens (kérosènes et gazoles) plus faibles. Cette différence est attribuée à la différence de force des sites acides sur les deux types de matériaux.

L'art antérieur fait état de nombreux travaux afin d'améliorer la sélectivité en distillats moyens des catalyseurs zéolithiques. Ces derniers sont composés d'une phase hydrogénante de composition très variable, c'est à dire pouvant contenir différents métaux, ladite phase hydrogénante étant déposée sur le support zéolithique généralement constitué d'une zéolithe Y et d'un liant. Un tel catalyseur est ensuite sulfuré pour être actif dans les réactions d'hydrocraquage.

Par exemple, on peut citer les travaux relatifs aux différents traitements que peut subir la zéolithe Y tels que la désalumination par traitement à la vapeur d'eau ou attaque acide de la zéolithe Y, par exemple, conformément à l'enseignement du brevet US 7 192 900 ou encore des travaux relatifs à l'ajout de promoteur selon l'enseignement du brevet US 6 524 470 ou l'utilisation de petits cristaux de zéolithes Y selon l'enseignement du brevet US 5 401 704. Peu de travaux ont été consacrés à l'étude de la nature de la phase métallique au sein du catalyseur. Les quantités de métaux mises en oeuvre dans les catalyseurs d'hydrocraquage sont généralement élevées et souvent supérieures à 15 % poids par rapport à la masse totale du catalyseur. Les métaux sont généralement dispersés sur le liant, de préférence amorphe du support, ledit support étant constitué du liant et de la zéolithe.
Les travaux de recherche du demandeur l'ont ainsi conduit à découvrir que l'utilisation pour la préparation d'un catalyseur selon l'invention d'une zéolithe désaluminée USY présentant des caractéristiques texturales bien particulières et le fait de déposer sur ladite zéolithe une phase hydrogénante spécifique constituée de nickel qui vient ainsi renforcer la phase hydrodéshydrogénante déposée sur la matrice, permettait d'obtenir un rendement amélioré en distillats moyens tout en maintenant une activité comparable. La fonction hydrogénante déposée sur ladite zéolithe désaluminée USY présentant des caractéristiques texturales bien particulières est assurée par l'élément métallique nickel qui est déposé sur ladite zéolithe dans une quantité comprise entre 0,8 et 3 % poids de métal nickel par rapport à la masse totale de la zéolithe.
Un objectif de la présente divulgation est donc de fournir un procédé d'hydrocraquage et/ou d'hydrotraitement de charges hydrocarbonées permettant d'obtenir un rendement amélioré en distillats moyens à iso-conversion par rapport à des catalyseurs de l'art antérieur et mettant en oeuvre un catalyseur zéolithique utilisant une zéolithe désaluminée USY présentant des caractéristiques texturales bien particulières, ledit catalyseur comprenant deux phase hydrogénantes distinctes dont l'une est déposée sur la zéolithe.
Plus précisément, la présente divulgation concerne un procédé d'hydrocraquage et/ou d'hydrotraitement de charges hydrocarbonées mettant en oeuvre un catalyseur comprenant au moins un élément hydro-déshydrogénant choisi dans le groupe formé par les éléments du groupe VIB et du groupe VIII non noble pris seul ou en mélange de la classification périodique, et un support comprenant au moins une matrice minérale poreuse et au moins une zéolithe désaluminée USY présentant un rapport atomique global de silicium sur aluminium compris entre 2,5 et 10, une fraction pondérale d'atome d'aluminium extra réseau supérieure à 20% par rapport à la masse totale de l'aluminium présent dans la zéolithe, un volume mésoporeux mesuré par porosimétrie à l'azote supérieur à 0,07 ml.g⁻¹, et un parametre cristallin a₀ de la maille élémentaire supérieur à 24,28 Å, dans lequel une quantité d'élément nickel comprise entre 0,8 et 3% poids par rapport à la masse totale de la zéolithe est déposée sur ladite zéolithe USY et dans lequel ledit catalyseur est sous forme sulfurée. Un avantage de la présente invention réside dans l'obtention d'un catalyseur présentant une activité très élevée en hydrocraquage des coupes hydrocarbonées et une amélioration du rendement en distillats moyens ainsi que d'une sélectivité en distillats moyens plus importante que les formules catalytiques connues dans l'art antérieur.
Sans vouloir être lié par une quelconque théorie, il semble que cette activité particulièrement élevée obtenue à l'issue du procédé selon la présente invention est due à la fois à l'utilisation d'une zéolithe désaluminée USY présentant des caractéristiques texturales bien particulières, en particulier un rapport atomique global de silicium sur aluminium compris entre 2,5 et 10 et à la présence conjointe d'une fonction hydrogénante déposée sur la matrice et d'une fonction hydrogénante constituée de nickel déposée sur ladite zéolithe, en particulier une quantité d'élément nickel comprise entre 0,8 et 3% poids par rapport à la masse totale de la zéolithe. Description de l'invention
Conformément à la présente divulgation, le procédé d'hydrocraquage et/ou d'hydrotraitement de charges hydrocarbonées met en oeuvre un catalyseur comprenant au moins un élément hydro-déshydogénant choisi dans le groupe formé par les éléments du groupe VIB et du groupe VIII non noble pris seul ou en mélange de la classification périodique, et un support comprenant au moins une matrice minérale poreuse et au moins une zéolithe Y désaluminée USY présentant un rapport atomique global de silicium sur aluminium compris entre 2,5 et 10, une fraction pondérale d'atome d'aluminium extra réseau supérieure à 20% par rapport à la masse totale de l'aluminium présent dans la zéolithe, un volume mésoporeux mesuré par porosimétrie à l'azote supérieur à 0,07 ml.g⁻¹, et un parametre cristallin a₀ de la maille élémentaire supérieur à 24,28 Å, dans lequel une quantité d'élément nickel comprise entre 0,8 et 3% poids par rapport à la masse totale de la zéolithe est déposée sur ladite zéolithe USY et dans lequel ledit catalyseur est sous forme sulfurée.
Dans toute la suite du texte, on entend par volume mésoporeux, le volume des pores dont le diamètre est compris entre 2 et 50 nm. On entend également par volume microporeux, le volume des pores dont le diamètre est inférieure à 2 nm. Les volumes microporeux et mésoporeux de la zéolithe désaluminée USY utilisée dans le support du catalyseur mis en oeuvre dans le procédé selon l'invention sont mesurés par adsorption / désorption d'azote. La méthode de mesure sera explicitée plus loin.
De même, dans toute la suite du texte, le support du catalyseur obtenu par le procédé selon l'invention comprend et est de préférence constitué d'au moins une matrice minérale poreuse et d'au moins une zéolithe désaluminée USY présentant les caractéristiques texturales particulières définies ci dessus, une quantité d'élément nickel comprise entre 0,8 et 3% poids par rapport à la masse totale de la zéolithe étant déposée sur ladite zéolithe USY.
De préférence, ledit support comprend et est de préférence constitué de :
- 0,1 à 80% en poids, de préférence de 0,1 à 70% en poids, et de manière préférée 0,1 à 50% en poids par rapport à la masse totale dudit support, d'une désaluminée USY présentant les caractéristiques texturales particulières définies ci dessus, une quantité d'élément nickel comprise entre 0,5 et 3% poids par rapport à la masse totale de la zéolithe étant déposée sur ladite zéolithe USY.
- et de 20 à 99,9% de préférence de 30 à 99,9% en poids, et de manière préférée de 50 à 99,9% en poids par rapport à la masse totale du catalyseur, d'au moins une matrice minérale poreuse.
La matrice minérale poreuse utilisée dans le support du catalyseur mis en oeuvre dans le procédé selon l'invention est l'alumine. L'alumine peut avantageusement se présenter sous toutes ses formes connues de l'homme du métier. De manière très préférée, l'alumine est l'alumine gamma.
Conformément à l'invention, la zéolithe désaluminée USY utilisée dans le support du catalyseur mis en oeuvre dans le procédé préparation selon l'invention présente un rapport atomique global de silicium sur aluminium compris entre 2,5 et 10, de préférence compris entre 3 et 10 et de manière préférée compris entre 3 et 8, une fraction pondérale d'atome d'aluminium extra réseau initiale supérieure à 20% par rapport à la masse totale de l'aluminium présent dans la zéolithe, un volume mésoporeux initial mesuré par porosimétrie à l'azote supérieur à 0,07 ml.g⁻¹, de préférence supérieur à 0,10 ml.g⁻¹ et de manière préférée supérieur à 0,14 ml.g⁻¹ et un parametre cristallin initial a₀ de la maille élémentaire supérieur à 24,28 Å, de préférence supérieur à 24,29 Å et de manière préférée supérieure à 24,30 Å. Ladite zéolithe désaluminée USY utilisée dans le support du catalyseur mis en oeuvre dans le procédé selon la divulgation présente également un volume microporeux mesuré par porosimétrie à l'azote supérieur à 0,20 ml.g⁻¹, et de préférence supérieur à 0,23 ml.g⁻¹.

### Obtention de ladite zéolithe désaluminée USY.

La zéolithe désaluminée USY présentant les caractéristiques texturales particulières définies ci dessus et convenant pour la mise en oeuvre du support du catalyseur utilisé dans le procédé selon la divulgation est avantageusement préparée à partir d'une zéolithe Y de type structural FAU présentant de préférence un rapport atomique global Si/Al après synthèse compris entre 2,3 et 2,8 et se présentant avantageusement sous forme NaY après synthèse. Ladite zéolithe Y de type structural FAU subit avantageusement un ou plusieurs échanges ioniques avant de subir l'étape de désalumination.
Le traitement de désalumination de ladite zéolithe Y de type structural FAU peut avantageusement être réalisé par toutes les méthodes connues de l'homme du métier. De manière préférée, la désalumination est réalisée par un traitement thermique en présence de vapeur d'eau (ou steaming selon la terminologie anglo-saxonne) et/ou par une ou plusieurs attaques acides avantageusement réalisées par traitement avec une solution aqueuse d'acide minéral ou organique.
De préférence, la désalumination est réalisée par un traitement thermique suivi d'une ou plusieurs attaques acides ou seulement par une ou plusieurs attaques acides.
De préférence, le traitement thermique en présence de vapeur d'eau auquel est soumis ladite zéolithe Y est réalisé à une température comprise entre 200 et 900°C, de préférence entre 300 et 900°C, de manière encore plus préférée entre 400 et 750°C. La durée dudit traitement thermique est avantageusement supérieure ou égale à 0,5h, de préférence comprise entre 0,5h et 24h, et de manière très préférée comprise entre 1h et 12h. Le pourcentage volumique de vapeur d'eau durant le traitement thermique est avantageusement compris entre 5 et 100%, de préférence entre 20 et 100%, de manière entre 40% et 100%. La fraction volumique autre que la vapeur d'eau éventuellement présente est formée d'air. Le débit de gaz formé de vapeur d'eau et éventuellement d'air est avantageusement compris entre 0,2 L.h⁻¹.g⁻¹ et 10 L.h⁻¹.g⁻¹ de la zéolithe Y.

Le traitement thermique permet d'extraire les atomes d'aluminium de la charpente de la zéolithe Y tout en maintenant le rapport atomique global Si/Al de la zéolithe traitée inchangé.

Le traitement thermique en présence de vapeur d'eau est avantageusement répété autant de fois qu'il est nécessaire pour obtenir la zéolithe désaluminée USY convenant pour la mise en oeuvre du support du catalyseur utilisé dans le procédé selon la divulgation possédant les caractéristiques texturales désirées et en particulier une fraction pondérale d'atome d'aluminium extra réseau supérieure à 10% poids par rapport à la masse totale d'aluminium présents dans ladite zéolithe. Le nombre de traitement thermique est avantageusement inférieur à 4. De préférence, un seul traitement thermique est réalisé à l'issu duquel la fraction pondérale d'atome d'aluminium extra réseau est mesurée par RMN de l'aluminium.

Afin de réaliser une désalumination de ladite zéolithe Y et d'ajuster le rapport atomique global Si/Al de la zéolithe Y désaluminée à une valeur comprise entre 3 et 10 selon l'invention, il est nécessaire de bien choisir et contrôler les conditions opératoires de chaque étape d'attaque acide. En particulier, la température à laquelle le traitement par la solution aqueuse d'acide minéral ou organique est réalisée, la nature et la concentration de l'acide utilisé, le rapport entre la quantité de solution acide et le poids de zéolithe traitée, la durée du traitement d'attaque acide et le nombre de traitements réalisés sont des paramètres significatifs pour la mise en oeuvre de chaque étape d'attaque acide.

L'acide choisi pour la mise en oeuvre de ladite étape d'attaque acide est avantageusement soit un acide minéral soit un acide organique, de préférence l'acide est un acide minéral choisi parmi l'acide nitrique HNO₃, l'acide chlorhydrique HCl et l'acide sulfurique H₂SO₄. De manière très préférée, l'acide utilisé est l'acide nitrique. Lorsqu'un acide organique est utilisé pour l'attaque acide, l'acide acétique CH₃CO₂H est préféré.

De préférence, le traitement d'attaque acide de ladite zéolithe Y par une solution aqueuse d'un acide minéral ou d'un acide organique est réalisé à une température comprise entre 30°C et 120°C, de préférence entre 50°C et 120°C, et de manière préférée entre 60 et 100°C. La concentration de l'acide dans la solution aqueuse est avantageusement comprise entre 0,05 et 20 mol.L⁻¹, de préférence entre 0,1 et 10 mol.L⁻¹, et de manière plus préférée entre 0,5 et 5 mol.L⁻¹. Le rapport entre le volume de solution acide V en ml et le poids de zéolithe Y traitée P en gramme est avantageusement compris entre 1 et 50, et de préférence entre 2 et 20. La durée de l'attaque acide est avantageusement supérieure à 1h, de préférence comprise entre 2h et 10h, et de manière préférée entre 2h et 8h. Le nombre de traitement d'attaque acide successif de ladite zéolithe Y par une solution aqueuse acide est avantageusement inférieur à 4. Dans le cas où plusieurs traitements d'attaques acides successifs sont réalisés, des solutions aqueuses d'acide minéral ou organique de concentrations différentes en acide peuvent être utilisées.

Afin d'ajuster le rapport atomique global Si/Al de la zéolithe désaluminée USY à une valeur comprise entre 3 et 10, ledit rapport est mesuré par Fluorescence X à l'issue de chaque traitement d'attaque acide réalisée.

Après avoir effectué le(s) traitement(s) d'attaque acide, ladite zéolithe obtenue est ensuite avantageusement lavée à l'eau distillée puis est séchée à une température comprise entre 80 et 140°C pendant une durée comprise entre 10 et 48h.

La zéolithe désaluminée USY obtenue convenant pour la mise en oeuvre du support du catalyseur utilisé dans le procédé selon la divulgation subit éventuellement une étape de désilication. Dans ladite étape de désilication, une partie des atomes de silicium contenu dans la charpente de ladite zéolithe sont extraits, créant des vides dans la structure et la formation d'une mésoporosité et/ou permettant la réinsertion d'au moins une partie de la fraction des atomes d'aluminium extra-réseau présents dans ladite zéolithe désaluminée USY, en lieu et place desdits atomes de silicium. Ceci permet ainsi la formation de nouveau sites acides de Brønsted. Ce deuxième phénomène est appelé ré-alumination.

L'étape de désilication optionnelle consiste en le procédé de modification de ladite zéolithe désaluminée USY décrit ci dessous.

La zéolithe désaluminée USY est donc avantageusement modifiée par un procédé de modification spécifique comprenant a) une étape de traitement basique consistant en le mélange de ladite zéolithe Y désaluminée avec une solution aqueuse basique, ladite solution aqueuse basique étant une solution de composés basiques choisis parmi les bases alcalines et les bases fortes non alcalines, ladite étape a) étant réalisée à une température comprise entre 40 et 100°C et pendant une durée comprise entre 5 minutes et 5h et au moins une étape c) de traitement thermique réalisée à une température comprise entre 200 et 700°C.

L'étape a) de traitement basique permet de retirer des atomes de silicium de la structure et d'insérer des atomes d'aluminium extra-réseau dans la charpente.

Ledit procédé de modification de ladite zéolithe désaluminée USY comporte une étape a) de traitement basique consistant en le mélange de ladite zéolithe désaluminée USY avec une solution aqueuse basique, ladite solution aqueuse basique étant une solution de composés basiques choisis parmi les bases alcalines et les bases fortes non alcalines, ladite étape a) étant réalisée à une température comprise entre 40 et 100°C et pendant une durée comprise entre 5 minutes et 5h.

Les composés basiques choisis parmi les bases alcalines sont de préférence choisis parmi les carbonates alcalins et les hydroxydes alcalins, les cations alcalins des carbonates alcalins et des hydroxydes alcalins appartenant avantageusement aux groupes IA ou IIA de la classification périodique et les bases fortes non alcalines sont de préférence choisies parmi les ammoniums quaternaires pris seuls ou en mélange et de manière préférée, la base forte non alcaline est l'hydroxyde de tétraméthylammonium.

Lesdits cations alcalins des carbonates alcalins et des hydroxydes alcalins appartenant avantageusement aux groupes IA ou IIA de la classification périodique sont de préférence choisis parmi les cations Na+, Li+, K+, Rb+, Cs+, Ba2+ et Ca2+ et de manière très préférée, ledit cation est le cation Na+ ou K+.

De préférence, la solution aqueuse est une solution de carbonate de sodium ou d'hydroxyde de sodium et de manière préférée, la solution aqueuse est une solution d'hydroxyde de sodium.

Ladite solution aqueuse basique de concentration comprise entre 0,001 mol.L⁻¹ et 12 mol.L⁻¹, de manière préférée de concentration entre 0,005 mol.L⁻¹ et 11 mol.L⁻¹ et de manière encore plus préférées de concentration entre 0,01 mol.L⁻¹ et 9 mol.L⁻¹.

L'étape a) de traitement basique du procédé de modification de ladite zéolithe désaluminée USY est réalisée dans des conditions de températures comprises entre 40 et 100°C (reflux) et de manière préférées entre 40 et 90°C et pendant une durée comprise entre 5 min et 5h, de manière préférée entre 15 min et 4 h et de manière encore plus préférée entre 15 min et 3 h.

Une fois le traitement basique de ladite zéolithe terminée, la solution est refroidie rapidement à température ambiante puis ladite zéolithe est séparée du liquide par toutes les techniques connues de l'homme du métier. La séparation peut-être réalisée par filtration ou par centrifugation, et de manière préférée par centrifugation. La zéolithe USY modifiée obtenue est ensuite lavée à l'eau distillée à une température comprise entre 20 et 100°C et de préférence à une température comprise entre 40 et 80°C et de manière très préférée à 50°C et séchée à une température comprise entre 80 et 150°C et de préférence entre 100 et 130°C et de manière très préférée à 120°C.

Dans le cas ou l'étape a) de traitement basique consiste en le mélange de ladite zéolithe désaluminée USY avec une solution aqueuse basique de composés choisis parmi les bases alcalines, la zéolithe contenue dans le support du catalyseur utilisé dans le procédé selon la divulgation contient, à l'issue de l'étape a) du procédé de modification une fraction partielle ou totale d'ions alcalins en position cationique.

Dans le cas ou l'étape a) de traitement basique consiste en le mélange de ladite zéolithe désaluminée USY avec une solution aqueuse basique de composés choisis parmi les bases non alcalines, la zéolithe contenue dans le support du catalyseur utilisé dans le procédé selon l'invention contient, à l'issue de l'étape a) du procédé de modification une fraction partielle ou totale d'ions ammonium quaternaires en position cationique.

Lors de l'étape a) de traitement basique du procédé de modification de la zéolithe désaluminée USY, une partie des atomes de silicium contenu dans la charpente de ladite zéolithe sont extraits, le phénomène est appelé désilication, créant des vides dans la structure et la formation d'une mésoporosité et/ou permettant la réinsertion d'au moins une partie de la fraction des atomes d'aluminium extra-réseau présents dans ladite zéolithe Y initiale désaluminée, en lieu et place des atomes de silicium extraits par désilication et permettant ainsi la formation de nouveau sites acides de Brønsted. Ce deuxième phénomène est appelé ré-alumination.

Dans le cas ou l'étape a) de traitement basique consiste en le mélange de ladite zéolithe désaluminée USY avec une solution aqueuse basique de composés basiques choisis parmi les bases alcalines et de préférence choisis parmi les carbonates alcalins et les hydroxydes alcalins et de manière très préférée avec une solution d'hydroxyde de sodium (NaOH), le procédé de modification de ladite zéolithe initiale USY désaluminée comporte avantageusement une étape b) d'au moins un échange partiel ou total desdits cations alcalins appartenant aux groupes IA et IIA de la classification périodique introduits lors de l'étape a) et présents en position cationique, par des cations NH₄⁺ et de préférence des cations Na+ par des cations NH₄⁺.

On entend par échange partiel ou total des cations alcalins par des cations NH₄⁺, l'échange de 80 à 100%, de manière préférée de 85 à 99,5% et de manière plus préférée de 88 et 99%, desdits cations alcalins par des cations NH₄⁺. La quantité de cations alcalins restante et de préférence, la quantité de cations Na⁺ restante dans la zéolithe modifiée, par rapport à la quantité de cations NH₄⁺ initialement présente dans la zéolithe, à l'issue de l'étape b) est avantageusement comprise entre 0 et 20%, de préférence entre 0,5 et 15% de manière préférée, entre 1 et 12%.

De préférence, pour cette étape, on procède à plusieurs échange(s) ionique(s) avec une solution contenant au moins un sel d'ammonium choisi parmi les sels de chlorate, sulfate, nitrate, phosphate, ou acétate d'ammonium, de manière à éliminer au moins en partie, les cations alcalins et de préférence les cations Na⁺ présents dans la zéolithe. De préférence, le sel d'ammonium est le nitrate d'ammonium NH₄NO₃.

Ainsi, la teneur en cations alcalins restante et de préférence en cations Na+ dans la zéolithe modifiée à l'issue de l'étape b) est de préférence telle que le rapport molaire cation alcalin/Aluminium et de préférence le rapport molaire Na/Al, est compris entre 0,2:1 et 0:1, de préférence compris entre 0,15:1 et 0,005:1, et de manière plus préférée compris entre 0,12:1 et 0,01:1.

Le rapport Na/Al désiré est obtenu en ajustant la concentration en NH₄⁺ de la solution d'échange cationique, la température de l'échange cationique et le nombre d'échange cationique. La concentration de la solution en NH₄⁺ dans la solution varie avantageusement entre 0,01 et 12 mol.L⁻¹, et de préférence entre 1 et 10 mol.L⁻¹. La température de l'étape d'échange est avantageusement comprise entre 20 et 100°C, de préférence entre 60 et 95°C, de manière préférée entre 60 et 90°C de manière plus préférée entre 60 et 85°C et de manière encore plus préférée entre 60 et 80°C. Le nombre d'échange cationique varie avantageusement entre 1 et 10 et de préférence entre 1 et 4.

Dans le cas ou l'étape a) de traitement basique consiste en le mélange de ladite zéolithe désaluminée USY avec une solution aqueuse de composés basiques choisis parmi les bases fortes non alcalines de préférence choisies parmi les ammoniums quaternaires pris seuls ou en mélange et de manière préférée la base forte non alcaline étant l'hydroxyde de tétraméthylammonium, la zéolithe modifiée issue de l'étape a) contient une fraction partielle ou totale d'ions ammonium quaternaires en position cationique.

Dans ce cas, le procédé de modification de ladite zéolithe désaluminée USY ne comporte avantageusement pas d'étape b) d'au moins un échange partiel ou total intermédiaire, la zéolithe modifiée issue de l'étape a) subit directement l'étape c) de traitement thermique.

Selon l'invention, le procédé de modification de la zéolithe désaluminée USY comporte ensuite au moins une étape c) de traitement thermique.

Dans le cas ou l'étape a) de traitement basique consiste en le mélange de ladite zéolithe désaluminée USY avec une solution aqueuse basique de composés choisis parmi les bases alcalines et de préférence choisis parmi les carbonates alcalins et les hydroxydes alcalins et de manière très préférée avec une solution d'hydroxyde de sodium (NaOH), l'étape c) de traitement thermique permet à la fois le séchage et la transformation des cations NH₄⁺ échangés lors de l'étape b), en protons.

Dans le cas ou l'étape a) de traitement basique consiste en le mélange de ladite zéolithe désaluminée USY avec une solution aqueuse basique de composés choisis parmi les bases fortes non alcalines et de préférence choisies parmi les ammoniums quaternaires pris seuls ou en mélange et de manière préférée la base forte non alcaline étant l'hydroxyde de tétraméthylammonium, l'étape c) de traitement thermique permet à la fois le séchage et la décomposition du cations d'ammonium quaternaire en position de contre-ions et la formation de protons.

Dans tous les cas, à l'issue de ladite étape c) de traitement thermique, les protons de la zéolithe sont partiellement ou totalement régénérés.

L'étape c) de traitement thermique selon l'invention est réalisée à une température comprise entre 200 et 700°C, plus préférentiellement entre 300 et 500°C. Ladite étape de traitement thermique est avantageusement mise en oeuvre sous air, sous oxygène, sous hydrogène, sous azote ou sous argon ou sous un mélange de deux ou plusieurs de ces gaz. La durée dudit traitement est avantageusement comprise entre 1 et 5 heures.

Le traitement par attaque acide de la désalumination permet à la fois d'extraire les atomes d'Aluminium de la charpente et d'extraire les atomes d'Aluminium des pores du solide zéolithique et le traitement basique du procédé de modification de la zéolithe désaluminée USY permet l'extraction d'une partie des atomes de silicium contenu dans la charpente de ladite zéolithe, le phénomène est appelé désilication. Le désilication crée des vides dans la structure et induit la formation d'une mésoporosité permettant la réinsertion d'au moins une partie de la fraction des atomes d'aluminium extra-réseau présents dans ladite zéolithe Y initiale désaluminée. Ce deuxième phénomène est appelé ré-alumination.
Ainsi, le rapport atomique global Si/Al de la zéolithe désaluminée USY, et éventuellement désilicée, obtenue augmente jusqu'à une valeur comprise entre 2,5 et 10, ladite zéolithe convenant pour la mise en oeuvre du support du catalyseur utilisé dans le procédé selon la divulgation.
Par ailleurs, ladite zéolithe désaluminée USY et éventuellement désilicée, obtenue présente également les autres caractéristiques texturales spécifiques définies ci-dessus, à savoir une fraction pondérale d'atome d'aluminium extra réseau supérieure à 20% par rapport à la masse totale de l'aluminium présent dans la zéolithe, un volume mésoporeux mesuré par porosimétrie à l'azote supérieur à 0,07 ml.g⁻¹, de préférence supérieur à 0,10 ml.g⁻¹ et de manière préférée supérieur à 0,14 ml.g⁻¹, un volume microporeux mesuré par porosimétrie à l'azote supérieur à 0,20 ml.g-1 et un parametre cristallin a₀ de la maille élémentaire supérieur à 24,28 Å, de préférence supérieur à 24,29 Å et de manière préférée supérieure à 24,30 Å.

Conformément à l'invention, une quantité d'élément nickel comprise entre 0,8 et 3% poids, et de manière préférée entre 1,2 et 3% poids par rapport à la masse totale de la zéolithe, est déposée sur ladite zéolithe désaluminée et éventuellement désilicée USY ainsi obtenue et convenant pour la mise en oeuvre du support du catalyseur utilisé dans le procédé selon la divulgation.

La phase active hydrogénante déposée sur ladite zéolithe lors de l'étape b) est uniquement constituée de nickel.
On entend par phase active hydrogénante déposée sur ladite zéoltihe, une phase active déposée sur la surface totale de ladite zéolithe, c'est à dire à la fois sur la surface microporeuse, mésoporeuse et externe de ladite zéolithe.

L'élément nickel est avantageusement déposé sur ladite zéolithe désaluminée et éventuellement désilicée USY soit par la technique de l'imprégnation à sec, soit par la technique de l'échange cationique, soit ledit élément nickel est introduit lors de la synthèse de la zéolithe.
La technique de l'imprégnation à sec consiste à remplir le volume poreux de ladite zéolithe désaluminée et éventuellement désilicée USY, avant sa mise en forme par une solution métallique contenant au moins un précurseur de nickel à une concentration donnée. Le précurseur de nickel est avantageusement choisi parmi les précurseurs de nickel connus de l'homme du métier et de préférence ledit précurseur est choisi parmi le nitrate de nickel, le chlorure de nickel, l'acétate de nickel, le sulfate de nickel et l'hydroxyde de nickel.
La technique de l'échange cationique consiste à échanger les protons H⁺ avec des cations Ni²⁺ sur la zéolithe. Dans le cas du nickel, on utilise habituellement du nitrate de nickel, du chlorure de nickel, de l'acétate de nickel, du sulfate de nickel ou de l'hydroxyde de nickel. Cette technique d'échange cationique est avantageusement utilisée pour déposer directement le métal nickel sur la poudre de zéolithe, avant son mélange avec une matrice.

La mise en évidence de la présence de la phase hydrogénante déposée sur ladite zéolithe désaluminée et éventuellement désilicée USY peut être avantageusement effectuée par diverses méthodes connues de l'homme du métier telles que par exemple la microsonde électronique et la microscopie électronique à transmission équipée d'un spectromètre à dispersion d'énergie X avec détecteur permettant l'identification et la quantification des éléments présents sur les cristaux de la zéolithe et dans la matrice minérale poreuse.

### La phase hydrogénante

Conformément à l'invention, le catalyseur mis en oeuvre dans le procédé selon la divulgation comprend au moins un élément hydro-déshydogénant choisi dans le groupe formé par les éléments du groupe VIB et du groupe VIII non noble, pris seul ou en mélange, de la classification périodique, et un support tel que défini ci dessus.

De préférence, les éléments du groupe VIB de la classification périodique sont choisis dans le groupe formé par le tungstène et le molybdène, pris seuls ou en mélange. Selon un mode de réalisation préféré, l'élément hydro-déshydrogénant choisi dans le groupe formé par les éléments du groupe VIB de la classification périodique est le molybdène.
Selon un autre mode de réalisation préféré, l'élément hydro-déshydrogénant choisi dans le groupe formé par les éléments du groupe VIB de la classification périodique est le tungstène.

De préférence, les éléments non nobles du groupe VIII de la classification périodique sont choisis dans le groupe formé par le cobalt et le nickel, pris seuls ou en mélange. Selon un mode de réalisation préféré, l'élément hydro-déshydrogénant choisi dans le groupe formé par les éléments du groupe VIII non noble est le cobalt.

Selon un autre mode de réalisation préféré, l'élément hydro-déshydrogénant choisi dans le groupe formé par les éléments du groupe VIII non noble est le nickel.

De préférence, ledit catalyseur comprend au moins un métal du groupe VIB en combinaison avec au moins un métal non noble du groupe VIII, les éléments non nobles du groupe VIII étant choisi dans le groupe formé par le cobalt et le nickel, pris seuls ou en mélange et les éléments du groupe VIB étant choisi dans le groupe formé par le tungstène et le molybdène, pris seuls ou en mélange.

D'une manière avantageuse, on utilise les associations de métaux suivantes : nickel-molybdène, cobalt-molybdène, nickel-tungstène, cobalt-tungstène, les associations préférées sont : nickel-molybdène, cobalt-molybdène, cobalt-tungstène, nickel-tungstène et encore plus avantageusement nickel-moybdène et nickel-tungstène.

Dans le cas où le catalyseur comprend au moins un métal du groupe VIB en combinaison avec au moins un métal non noble du groupe VIII, la teneur en métal du groupe VIB est avantageusement comprise, en pourcentage d'oxyde de l'élément, entre 5 et 40 % en poids par rapport à la masse totale dudit catalyseur, de manière préférée entre 8 et 35 % en poids et de manière très préférée entre 10 et 35 % en poids et la teneur en métal non noble du groupe VIII est avantageusement comprise, en pourcentage d'oxyde de l'élément, entre 0,5 et 10 % en poids par rapport à la masse totale dudit catalyseur, de manière préférée entre 1 et 8 % en poids et de manière très préférée entre 1,5 et 6 % en poids, la teneur en élément nickel déposée sur la zéolithe désaluminée USY n'étant pas comprise dans ladite teneur en métal non noble du groupe VIII.
Il est également possible d'utiliser des associations de trois métaux telles que par exemple les associations nickel-cobalt-molybdène, nickel-molybdène-tungstène, nickel-cobalt-tungstène.
Ledit catalyseur peut également avantageusement contenir :
- de 0 à 20% en poids, de préférence de 0,1 à 15% en poids et de manière encore plus préférée de 0,1 à 10% en poids d'oxyde dudit élément par rapport à la masse totale du catalyseur d'au moins un élément dopant choisi dans le groupe constitué par le silicium, le bore et le phosphore, non compris le silicium contenu dans la charpente de la zéolithe et éventuellement
- de 0 à 60% en poids, de préférence de 0,1 à 50% en poids, et de manière encore plus préférée de 0,1 à 40% en poids d'oxyde dudit élément par rapport à la masse totale du catalyseur, d'au moins un élément choisi dans le groupe VB et de préférence le niobium et éventuellement encore
- de 0 à 20% en poids, de préférence de 0,1 à 15% en poids et de manière encore plus préférée de 0,1 à 10% en poids d'oxyde dudit élément par rapport à la masse totale du catalyseur d'au moins un élément choisi dans le groupe VIIA, de préférence le fluor.
De préférence, ledit catalyseur comprend une teneur en zéolithe désaluminée et éventuellement désilicée USY, une quantité d'élément nickel comprise entre 0,8 et 3% poids par rapport à la masse totale de la zéolithe étant déposée sur ladite zéolithe, comprise entre 0,1 et 75% poids, de préférence entre 0,1 et 66% poids et de manière préférée entre 0,1 et 47% poids par rapport à la masse totale dudit catalyseur.

### Préparation du catalyseur

Conformément à l'invention le catalyseur est préparé selon le procédé de préparation de la revendication 1, comprenant les étapes suivantes :
b) dépôt sur ladite zéolithe désaluminée et éventuellement désilicée USY présentant les caractéristiques spécifiques définies dans la revendication 1 de l'élément nickel dans une quantité comprise entre 0,8 et 3% poids par rapport à la masse totale de la zéolithe;
c) mise en forme du mélange de ladite zéolithe désaluminée imprégnée obtenue à l'issue de l'étape b) avec l'alumine pour obtenir le support;
d) introduction d'au moins un élément hydro-déshydrogénant par imprégnation du support avec au moins un composé dudit élément;
e) séchage et calcination du produit final obtenu et éventuellement séchage et/ou calcination des produits obtenus à l'issue des étapes a) ou b) ou après une imprégnation.

L'étape b) est éventuellement suivie d'un séchage et/ou d'une calcination ou d'une calcination sans séchage préalable. Le séchage est avantageusement réalisé à une température comprise entre 60 et 250°C et la calcination à une température de 250 à 800°C pendant une durée comprise entre 30 minutes et 6 heures.

La zéolithe imprégnée peut avantageusement être, sans que cela soit limitatif, sous forme de poudre, poudre broyée, suspension, suspension ayant subi un traitement de désagglomération. Ainsi, la zéolithe imprégnée peut avantageusement être mise en suspension acidulée ou non à une concentration ajustée à la teneur finale en zéolithe visée sur le support. Cette suspension appelée couramment une barbotine est alors avantageusement mélangée avec les précurseurs de la matrice.

Une des méthodes préférées de mise en forme consiste à malaxer ladite zéolithe dans un gel humide de préférence d'alumine pendant quelques dizaines de minutes, puis à passer la pâte ainsi obtenue à travers une filière pour former des extrudés de diamètre compris de préférence entre 0,4 et 5 mm.

L'introduction des éléments du groupe VIB et/ou VIII peut avantageusement être accompagnée de celle d'au moins un élément promoteur choisi parmi le phosphore, bore, et silicium et éventuellement de celle de l'élément du groupe VIIA et/ou VB. Le solide mis en forme est alors éventuellement séché à une température comprise entre 60 et 250°C et calciné à une température de 250 à 800°C pendant une durée comprise entre 30 minutes et 6 heures.

Le support peut avantageusement être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

L'étape d) est avantageusement réalisée par une méthode bien connue de l'homme de métier, c'est à dire par une ou plusieurs opérations d'imprégnation du support mis en forme et calciné par une solution contenant les précurseurs des éléments du groupe VIB et/ou VIII, éventuellement le précurseur d'au moins un élément promoteur et éventuellement le précurseur d'au moins un élément du groupe VIIA et/ou du groupe VB.

Dans le cas où le catalyseur obtenu par le procédé de préparation selon la présente invention contient un métal non noble du groupe VIII, les métaux du groupe VIII sont de préférence introduits par une ou plusieurs opérations d'imprégnation du support mis en forme et calciné, après ceux du groupe VIB ou en même temps que ces derniers.

L'étape d) est ensuite éventuellement suivie d'un séchage à une température comprise entre 60 et 250°C et éventuellement d'une calcination à une température comprise 250 à 800°C.

Les sources de molybdène et de tungstène sont avantageusement choisies parmi les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII non nobles qui peuvent être utilisées sont bien connues de l'homme du métier. Par exemple, pour les métaux non nobles on utilisera les nitrates, les sulfates, les hydroxydes, les phosphates, les halogénures comme par exemple, les chlorures, les bromures et les fluorures, les carboxylates comme par exemple les acétates et les carbonates.

La source de phosphore préférée est l'acide orthophosphorique H₃PO₄, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène - phosphore ou molybdène-tungstène-phosphore. Ces composés mixtes peuvent être des hétéropolyanions. Ces composés peuvent être des hétéropolyanions d'Anderson, par exemple.

La source de bore peut être l'acide borique, de préférence l'acide orthoborique H₃BO₃, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe VB qui peuvent être utilisées sont bien connues de l'homme du métier. Par exemple, parmi les sources de niobium, on peut utiliser les oxydes, tel que le pentaoxyde de diniobium Nb₂O₅, l'acide niobique Nb₂O₅.H₂O, les hydroxydes de niobium et les polyoxoniobates, les alkoxydes de niobium de formule Nb(OR1)₃ où R1 est un radical alkyle, l'oxalate de niobium NbO(HC₂O₄)₅, le niobate d'ammonium. On utilise de préférence l'oxalate de niobium ou le niobate d'ammonium.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH₄)₂ SiF₆, le tétrafluorure de silicium SiF₄ ou de sodium Na₂SiF₆. Le fluor peut être introduit par exemple par imprégnation d'une solution aqueuse d'acide fluorhydrique ou de fluorure d'ammonium.

Les catalyseurs préparés par le procédé selon l'invention ont avantageusement la forme de sphères ou d'extrudés. Il est toutefois avantageux que le catalyseur se présente sous forme d'extrudés d'un diamètre compris entre 0,4 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée. Les catalyseurs préparés par le procédé selon l'invention peuvent éventuellement être fabriqués et employés sous la forme de poudre concassée, de tablettes, d'anneaux, de billes, de roues.

Conformément à l'invention, le catalyseur préparés par le procédé selon l'invention est sous forme sulfurée. Les métaux du groupe VIB et/ou du groupe VIII non noble dudit catalyseur sont donc présents sous forme sulfure.

Conformément à l'invention et préalablement à l'injection de la charge, les catalyseurs préparés par le procédé selon la présente invention sont soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

### Techniques de caractérisation

Le rapport Si/Al atomique global de la zéolithe désaluminée USY utilisée dans le support du catalyseur préparé par le procédé selon l'invention, est mesurée par fluorescence X. La fluorescence X est une technique d'analyse élémentaire globale qui permet l'analyse de tous les éléments du système périodique à partir du bore. Il est possible de doser de quelques ppm jusqu'à 100%. Dans cette invention, cette technique est utilisée pour doser le silicium et l'aluminium des zéolithes (en pourcentage massique) et permet ainsi de calculer le ratio atomique Si/Al.
La fraction pondérale des atomes d'aluminium tétracoordinés et hexacoordinés présents dans ladite zéolithe désaluminée USY est déterminée par résonance magnétique nucléaire du solide de ²⁷Al. La RMN de l'aluminium est en effet connue pour être utilisée en vue de repérer et de quantifier les différents états de coordination de ce noyau ("Analyse physico-chimiques des catalyseurs industriels", J. Lynch, Editions Technip (2001) chap. 13, pages 290 et 291). Les atomes d'aluminium tétracoordinés Al_{IV} résonnent à un déplacement chimique compris entre +40 ppm et +75 ppm et les atomes d'aluminium hexacoordinés ou extra réseau Al_{VI} résonnent à un déplacement chimique compris entre -15 ppm et +15 ppm. La fraction pondérale des deux espèces aluminiques Al_{IV} et Al_{VI} est quantifié par intégration des signaux correspondant à chacune de ces espèces.
Plus précisément, ladite zéolithe désaluminée USY a été analysée par RMN-MAS du solide ²⁷Al sur un spectromètre Bruker de type Avance 400 MHz à l'aide d'une sonde 4 mm optimisée pour l' ²⁷Al. La vitesse de rotation de l'échantillon est voisine de 14 kHz. L'atome d'aluminium est un noyau quadripolaire dont le spin est égal à 5/2. Dans des conditions d'analyse dites sélectives, à savoir un champs de radiofréquence faible égal à 30 kHz, un angle d'impulsion faible égal à π/2 et en présence d'un échantillon saturé en eau, la technique de RMN de rotation à l'angle magique (MAS), notée RMN-MAS, est une technique quantitative. La décomposition de chaque spectre RMN-MAS permet d'accéder directement à la quantité des différentes espèces aluminiques, à savoir des atomes d'aluminium tétracoordinés Al_{IV} et des atomes d'aluminium hexacoordinés ou extra réseau Al_{VI}. Chaque spectre est calé en déplacement chimique par rapport à une solution 1M de nitrate d'aluminium pour laquelle le signal d'aluminium est à zéro ppm. Les signaux caractérisant les atomes d'aluminium tétracoordinés Al_{IV} sont intégrés entre +40 ppm et +75 ppm ce qui correspond à l'aire 1 et les signaux caractérisant les atomes d'aluminium hexacoordinés Al_{VI} sont intégrés entre -15 ppm et +15 ppm ce qui correspond à l'aire 2. La fraction pondérale des atomes d'aluminium hexacoordinés Al_{VI} est égal au rapport aire 2/(aire 1 + aire 2).
Le paramètre cristallin de maille a₀ de ladite zéolithe désaluminée USY est mesurée par diffraction des Rayons X (DRX). Pour la zéolithe Y de type FAU, le paramètre de maille a₀ est calculé à partir des positions des pics correspondant aux indices de Miller 533, 642 et 555. La longueur de la liaison Al-O étant plus grande que celle de la liaison Si-O, plus le nombre d'aluminium en position tétraédrique dans la charpente de la zéolithe est grand, plus le paramètre a₀ est grand. Pour les cristaux constitués de mailles cubiques tels que les zéolithes Y de type FAU, une relation linéaire existe entre le paramètre de maille a₀ et le rapport Si/Al.

Les volumes microporeux et mésoporeux de ladite zéolithe désaluminée USY sont mesurées par adsorption/désorption d'azote. L'analyse des courbes d'isothermes d'adsorption d'azote des solides microporeux et mésoporeux permet le calcul des volumes poreux par la technique appelée technique volumétrique. Différents types de modèles sont utilisables. La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P0= 0,95. Le volume microporeux est obtenu par la méthode du "t-plot" ou bien en mesurant le volume adsorbé à P/P0=0,35. Le volume mésoporeux est obtenu en soustrayant le volume microporeux du volume poreux total.

A l'issue de la préparation du catalyseur selon l'invention, les deux phases hydrogénantes sont bien distinctes. Les deux phases hydrogénantes sont mise en évidence par la méthode de la microscopie électronique à transmission équipée d'un spectromètre à dispersion d'énergie X permettant l'identification et la quantification des éléments présents dans les cristaux de la zéolithe. Pour cela on emploi un microscope électronique à transmission, JEOL 2100 HR équipé d'un spectromètre à dispersion d'énergie X JEOL EX-2300-BU. Les extrudés de catalyseurs sont broyés finement dans un mortier. La poudre est incluse dans de la résine pour réaliser des coupes ultrafines d'épaisseur 700 Å pour les deux catalyseurs. Les coupes produites sont recueillies sur une grille en Cu recouverte d'une membrane C à trous servant de support à la préparation. Ces préparations sont séchées sous une lampe I.R. avant d'être introduites dans le microscope électronique à transmission où elles seront soumises à un vide primaire durant quelques minutes puis à un vide secondaire durant toute l'observation. Le microscope électronique permet de parfaitement identifier les cristaux de zéolithe d'une taille d'environ 0,4 micron dispersés dans la matrice alumine. On procède ensuite à un certain nombre d'analyses locales (de 15 à 20) effectuées sur diverses zones de matrice et sur divers cristaux de zéolithes avec un faisceau sonde de 0,1 micron de diamètre. Le traitement quantitatif du signal permet d'obtenir la concentration relative en % atomique des éléments (hors oxygène).

### Procédés d'hydrocraquage et d'hydrotraitement

La présente divulgation porte sur un procédé d'hydrocraquage et/ou d'hydrotraitement opérant en présence d'hydrogène, à une température supérieure à 200°C, sous une pression supérieure à 1 MPa, la vitesse spatiale étant comprise entre 0,1 et 20 h-1 et la quantité d'hydrogène introduite est telle que le rapport volumique litre d'hydrogène/litre d'hydrocarbure soit compris entre 80 et 5000 L/L.

Plus particulièrement, la présente divulgation porte sur un procédé d'hydroconversion et en particulier d'hydrocraquage ainsi que sur un procédé d'hydrotraitement de charges hydrocarbonées utilisant le catalyseur obtenu par le procédé décrit ci dessus.

De préférence, le procédé d'hydrocraquage opèrent en présence d'hydrogène, à une température supérieure à 200°C, de préférence comprise entre 250 et 480°C, de manière préférée entre 320 et 450°C, de manière très préférée entre 330 et 435°C, sous une pression supérieure à 1 MPa, de préférence entre 2 et 25 MPa, de manière préférée entre 3 et 20 MPa, à la vitesse spatiale comprise entre 0,1 et 20 h⁻¹, de préférence 0,1 et 6 h⁻¹, de manière préférée entre 0,2 et 3 h⁻¹, et la quantité d'hydrogène introduite est telle que le rapport volumique litre d'hydrogène/litre d'hydrocarbure est compris entre 80 et 5000 L/L et le plus souvent entre 100 et 2000 L/L.

Ces conditions opératoires utilisées dans les procédés permettent généralement d'atteindre des conversions par passe, en produits ayant des points d'ébullition inférieurs à 340°C, et mieux inférieurs à 370°C, supérieures à 15%poids et de manière encore plus préférée comprises entre 20 et 95%poids.

La présente divulgation porte également sur un procédé d'hydrotraitement de charges hydrocarbonées utilisant le catalyseur décrit ci dessus, ledit procédé d'hydrotraitement pouvant avantageusement être placé seul ou en amont d'un procédé d'hydrocraquage. Ledit procédé d'hydrotraitement est décrit plus loin.

### Charges

Des charges très variées peuvent être traitées par les procédés décrits ci-dessus. Elles contiennent avantageusement au moins 20% volume et de préférence au moins 80% volume de composés bouillant au-dessus de 340°C.
La charge est avantageusement choisie parmi les LCO (Light Cycle Oil = gazoles légers issus d'une unité de craquage catalytique), les distillats atmosphériques, les distillats sous vide tels que par exemple gasoils issus de la distillation directe du brut ou d'unités de conversion telles que le FCC, le coker ou la viscoréduction, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, et les huiles désasphaltées, prises seules ou en mélange. La liste ci-dessus n'est pas limitative. Les paraffines issues du procédé Fischer-Tropsch sont exclues. Lesdites charges ont de préférence un point d'ébullition T5 supérieur à 340°C, de préférence supérieur à 370°C, c'est à dire que 95% des composés présents dans la charge ont un point d'ébullition supérieur à 340°C, et de manière préférée supérieur à 370°C.

La teneur en azote des charges traitées dans les procédés est avantageusement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés est avantageusement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés est de préférence inférieure à 1 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

### Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement. Les catalyseurs ou lits de garde qui peuvent être avantageusement utilisés en amont du procédé d'hydrocraquage et/ou d'hydrotraitement sont décrits dans le brevet FR 2 888 584.

### Modes de réalisation

Les procédés d'hydrocraquage mettant en oeuvre les catalyseurs décrits ci dessus, couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Les procédés d'hydrocraquage peuvent avantageusement mettre en oeuvre ledit catalyseur décrit ci dessus seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydrotraitement classique situé en amont du catalyseur utilisé.

Les procédés d'hydrocraquage peuvent avantageusement également mettre en oeuvre ledit catalyseur décrit ci dessus seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydrotraitement classique situé dans un réacteur en lit fixe ou en lit bouillonnant en amont du catalyseur utilisé dans le procédé.

Le lit bouillonnant s'opère avec retrait de catalyseur usé et ajout journalier de catalyseur neuf afin de conserver une activité du catalyseur stable.
Le catalyseur décrit peut également avantageusement être utilisé dans la première zone réactionnelle d'hydrotraitement, en prétraitement convertissant, seul ou en association avec un autre catalyseur d'hydroraffinage classique, situé en amont du catalyseur décrit, dans un ou plusieurs lit(s) catalytique(s), dans un ou plusieurs réacteur(s), en lit fixe ou en lit bouillonnant.

### Procédé dit en une étape

Le procédé d'hydrocraquage peut avantageusement être mis en oeuvre dans un procédé dit en une étape.

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif décrit ci-dessus. Cependant, il est à noter qu'aucune séparation n'intervient entre les deux types de catalyseurs. La totalité de l'effluent en sortie de réacteur est injectée sur ledit catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge. Le catalyseur décrit est donc avantageusement mis en oeuvre dans un procédé d'hydrocraquage dit en une étape, dans une zone d'hydrocraquage placée en aval d'une zone d'hydroraffinage, aucune séparation intermédiaire n'étant mise en oeuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur d'hydrocraquage décrit, est un catalyseur à base d'éléments du groupe VIII non nobles et éventuellement en combinaison avec des éléments du groupe VIB sur support alumine ou silice alumine. De préférence, ledit catalyseur d'hydroraffinage comprend soit du nickel et du tungstène, soit du nickel et du molybdène, soit du cobalt et du molybdène. Ledit catalyseur comprend également éventuellement un élément dopant choisi parmi le phosphore, le bore et le silicium.

Le catalyseur décrit peut également avantageusement être utilisé dans la première zone réactionnelle d'hydroraffinage, en prétraitement convertissant, seul ou en association avec un autre catalyseur d'hydroraffinage classique, situé en amont dudit catalyseur décrit, dans un ou plusieurs lit(s) catalytique(s), dans un ou plusieurs réacteur(s).

### Procédé dit en une étape en lit fixe avec séparation intermédiaire

Le procédé d'hydrocraquage peut avantageusement être mis en oeuvre dans un procédé dit en une étape en lit fixe avec séparation intermédiaire.

Ledit procédé comporte avantageusement une zone d'hydroraffinage, une zone permettant l'élimination partielle de l'ammoniaque, par exemple par un flash chaud, et une zone comportant ledit catalyseur d'hydrocraquage préparé par le procédé selon l'invention. Ce procédé d'hydrocraquage de charges hydrocarbonées en une étape pour la production de distillats moyens et éventuellement de bases huiles comporte avantageusement au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également avantageusement une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est avantageusement réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote.

Le catalyseur préparé par le procédé selon l'invention est donc avantageusement mis en oeuvre dans un procédé d'hydrocraquage dit en une étape en lit fixe avec séparation intermédiaire, dans une zone d'hydrocraquage placée en aval d'une zone d'hydroraffinage, une séparation intermédiaire d'élimination partielle de l'ammoniaque étant mise en oeuvre entre les deux zones.
De préférence, le catalyseur d'hydroraffinage utilisé dans la première zone réactionnelle d'hydroraffinage, seul ou en association avec un autre catalyseur d'hydroraffinage classique, situé en amont du catalyseur préparé par le procédé selon l'invention, est identique au catalyseur d'hydroraffinage décrit dans le cas d'un procédé dit en une étape.

Le catalyseur préparé par le procédé selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur préparé par le procédé selon l'invention, dans un ou plusieurs lit(s) catalytique(s), dans un ou plusieurs réacteur(s).

### Procédé dit en deux étapes

Le procédé d'hydrocraquage peut avantageusement être mis en oeuvre dans un procédé dit en deux étapes.

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en NH₃ ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent avantageusement être utilisées dans la première étape d'un schéma dit en deux étapes, que le catalyseur selon l'invention soit utilisé seul ou en association avec un catalyseur d'hydroraffinage classique.

Le catalyseur préparé par le procédé selon l'invention est donc avantageusement mis en oeuvre dans un procédé d'hydrocraquage dit en deux étapes, dans la deuxième étape d'hydrocraquage placée en aval de la première étape d'hydroraffinage, une séparation intermédiaire étant mise en oeuvre entre les deux zones.

Pour les procédés dits en une étape et pour la première étape d'hydroraffinage des procédés d'hydrocraquage dits en deux étapes, les catalyseurs d'hydroraffinage classique pouvant avantageusement être utilisés sont des catalyseurs identiques au catalyseur d'hydroraffinage décrit dans le cas d'un procédé dit en une étape.

### Hvdrotraitement/hvdroraffinaae de charges hydrocarbonées

La divulgation porte également sur un procédé d'hydrotraitement de charges hydrocarbonées utilisant le catalyseur décrit ci dessus, ledit procédé d'hydrotraitement pouvant avantageusement être placé seul ou en amont d'un procédé d'hydrocraquage.

L'hydrotraitement et l'hydroraffinage de charges hydrocarbonées telles que les coupes pétrolières, les coupes issues du charbon ou les hydrocarbures produits à partir du gaz naturel concerne l'hydrogénation, l'hydrodésulfuration, l'hydrodéazotation, l'hydrodéoxygénation, l'hydrodéaromatisation et l'hydrodémétallation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d'hydrotraitement sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent de préférence des hétéroatomes tels que le soufre, l'oxygène et l'azote et/ou au moins un métal.

Le procédé d'hydrotraitement opère avantageusement à une température comprise entre 200 et 450 C, de préférence entre 250 et 440°C, à une pression comprise entre 1 et 25 MPa, de préférence entre 1 et 18 MPa, à une vitesse volumique horaire comprise entre 0,1 et 20 h⁻¹, de manière préférée entre 0,2 et 5 h⁻¹, et à un rapport hydrogène/charge exprimé en volume d'hydrogène, mesuré dans les conditions normales de température et pression, par volume de charge liquide généralement comprise entre 80 L/L et 5000 L/L et de préférence entre 100 L/L et 2000 L/L.
Dans le cas où ledit procédé d'hydrotraitement est placé seul ou en amont d'un procédé d'hydrocraquage, le catalyseur préparé pa le procédé selon l'invention peut avantageusement être utilisé dans la zone réactionnelle d'hydrotraitement, en prétraitement convertissant, seul ou en association avec un autre catalyseur d'hydrotraitement classique, situé en amont du catalyseur décrit selon l'invention, dans un ou plusieurs lit(s) catalytique(s), dans un ou plusieurs réacteur(s). Le catalyseur utilisé dans le procédé d'hydrocraquage placé en aval du procédé d'hydrotraitement peut avantageusement être identique ou différent du catalyseur utilisé dans le procédé d'hydrotraitement.

Les exemples suivants illustrent la présente invention sans toutefois en limiter la portée.

### Exemple 1 - Préparation de la zéolithe Z1

On considère une zéolithe commerciale USY qui présente un rapport atomique global Si/Al = 5,5 mesuré par fluorescence X, une fraction pondérale d'atomes d'aluminum extra réseau initiale égale à 40 % poids par rapport à la masse totale de l'aluminium présent dans la zéolithe et mesurée par RMN de l'aluminium, un volume mésoporeux initial mesuré par porosimétrie à l'azote égal à 0,14 ml.g-1, et un paramètre cristallin initial a0 de la maille élémentaire égal à 24,34 Å, mesuré par DRX. 30 g de cette zéolithe USY sont imprégnés à sec avec une solution de nitrate de nickel de manière à déposer 2,2 % poids de nickel par rapport au poids de la zéolithe sèche. La zéolithe USY imprégnée est ensuite séchée une nuit à 120°C puis subit un traitement thermique à 450°C pendant 2h précédé de paliers de 1h à 150°C, 250°C et 350°C. Le traitement thermique est fait en utilisant un débit d'air de 2 L.h⁻¹.g⁻¹ de zéolithe. La zéolithe Z1 obtenue présente un rapport atomique global Si/Al = 5,5 et une teneur en Ni égal à 2,2 % poids mesurés par fluorescence X par rapport à la masse de zéolithe sèche, une fraction pondérale d'atome d'aluminum extra réseau mesurée par RMN de l'aluminium égale à 39 % poids par rapport à la masse totale de l'aluminium présent dans la zéolithe, un volume mésoporeux mesuré par porosimétrie à l'azote égal à 0,14 ml.g⁻¹, un volume microporeux mesuré par porosimétrie à l'azote égal à 0,28 ml.g⁻¹ et un paramètre cristallin a₀ de la maille élémentaire mesuré par DRX égal à 24,34 Å. Ces caractéristiques sont rappellées dans le Tableau 1.

### Exemple 2 - Préparation de la zéolithe Z2

On considère une zéolithe commerciale USY qui présente un rapport atomique global Si/Al = 13,8 mesuré par fluorescence X, une fraction pondérale d'atome d'aluminum extra réseau initiale égale à 15 % poids par rapport à la masse totale de l'aluminium présent dans la zéolithe et mesurée par RMN de l'aluminium, un volume mésoporeux initial mesuré par porosimétrie à l'azote égal à 0,15 ml.g-1, et un paramètre cristallin initial a0 de la maille élémentaire égal à 24,29 Å, mesuré par DRX. 30 g de cette zéolithe USY sont imprégnés à sec avec une solution de nitrate de nickel de manière à déposer 2,2 % poids de nickel par rapport au poids de la zéolithe sèche. La zéolithe USY imprégnée est ensuite séchée une nuit à 120°C puis subit un traitement thermique à 450°C pendant 2h précédé de paliers de 1h à 150°C, 250°C et 350°C. Le traitement thermique est fait en utilisant un débit d'air de 2 L.h⁻¹.g⁻¹ de zéolithe. La zéolithe Z2 obtenue présente un rapport atomique global Si/Al = 13,8 et une teneur en Ni égal à 2,2 % poids mesurés par fluorescence X par rapport à la masse de zéolithe sèche, une fraction pondérale d'atome d'aluminum extra réseau mesurée par RMN de l'aluminium égale à 14 % poids par rapport à la masse totale de l'aluminium présent dans la zéolithe, un volume mésoporeux mesuré par porosimétrie à l'azote égal à 0,14 ml.g⁻¹, un volume microporeux mesuré par porosimétrie à l'azote égal à 0,32 ml.g⁻¹ et un paramètre cristallin a₀ de la maille élémentaire mesuré par DRX égal à 24,29 Å. Ces caractéristiques sont rappellées dans le Tableau 1.

### Exemple 3 - Préparation de la zéolithe Z3

On considère une zéolithe commerciale USY qui présente un rapport atomique global Si/Al = 5,5 mesuré par fluorescence X, une fraction pondérale d'atome d'aluminum extra réseau initiale égale à 40 % poids par rapport à la masse totale de l'aluminium présent dans la zéolithe et mesurée par RMN de l'aluminium, un volume mésoporeux initial mesuré par porosimétrie à l'azote égal à 0,14 ml.g⁻¹, et un paramètre cristallin initial a₀ de la maille élémentaire égal à 24,34 Å, mesuré par DRX. 30 g de cette zéolithe USY sont imprégnés à sec avec une solution de nitrate de nickel de manière à déposer 3,5 % poids de nickel par rapport au poids de la zéolithe sèche. La zéolithe USY imprégnée est ensuite séchée une nuit à 120°C puis subit un traitement thermique à 450°C pendant 2h précédé de paliers de 1h à 150°C, 250°C et 350°C. Le traitement thermique est fait en utilisant un débit d'air de 2 L.h⁻¹.g⁻¹ de zéolithe. La zéolithe Z3 obtenue présente un rapport atomique global Si/Al = 5,5 et une teneur en Ni égal à 3,6 % poids mesurés par fluorescence X par rapport à la masse de zéolithe sèche, une fraction pondérale d'atome d'aluminum extra réseau mesurée par RMN de l'aluminium égale à 39 % poids par rapport à la masse totale de l'aluminium présent dans la zéolithe, un volume mésoporeux mesuré par porosimétrie à l'azote égal à 0,14 ml.g⁻¹, un volume microporeux mesuré par porosimétrie à l'azote égal à 0,27 ml.g-1 et un paramètre cristallin a₀ de la maille élémentaire mesuré par DRX égal à 24,34 Å. Ces caractéristiques sont rappellées dans le Tableau 1.

### Exemple 4 - Préparation de la zéolithe Z4

On considère une zéolithe commerciale USY qui présente un rapport atomique global Si/Al = 13,8 mesuré par fluorescence X, une fraction pondérale d'atome d'aluminum extra réseau initiale égale à 15 % poids par rapport à la masse totale de l'aluminium présent dans la zéolithe et mesurée par RMN de l'aluminium, un volume mésoporeux initial mesuré par porosimétrie à l'azote égal à 0,15 ml.g⁻¹, et un paramètre cristallin initial a0 de la maille élémentaire égal à 24,29 Å, mesuré par DRX. 30 g de cette zéolithe USY sont imprégnés à sec avec une solution de nitrate de nickel de manière à déposer 3,5 % poids de nickel par rapport au poids de la zéolithe sèche. La zéolithe USY imprégnée est ensuite séchée une nuit à 120°C puis subit un traitement thermique à 450°C pendant 2h précédé de paliers d'1h à 150°C, 250°C et 350°C. Le traitement thermique est fait en utilisant un débit d'air de 2 L.h⁻¹.g⁻¹ de zéolithe. La zéolithe Z4 obtenue présente un rapport atomique global Si/Al = 13,8 et une teneur en Ni égal à 3,5 % poids mesurés par fluorescence X par rapport à la masse de zéolithe sèche, une fraction pondérale d'atome d'aluminum extra réseau mesurée par RMN de l'aluminium égale à 14 % poids par rapport à la masse totale de l'aluminium présent dans la zéolithe, un volume mésoporeux mesuré par porosimétrie à l'azote égal à 0,14 ml.g⁻¹, un volume microporeux mesuré par porosimétrie à l'azote égal à 0,32 ml.g⁻¹ et un paramètre cristallin a₀ de la maille élémentaire mesuré par DRX égal à 24,29 Å. Ces caractéristiques sont rappellées dans le Tableau 1.

### Exemple 5 - Préparation de la zéolithe Z5

On considère une zéolithe commerciale USY qui présente un rapport atomique global Si/Al = 5,5 mesuré par fluorescence X, une fraction pondérale d'atome d'aluminum extra réseau initiale égale à 40 % poids par rapport à la masse totale de l'aluminium présent dans la zéolithe et mesurée par RMN de l'aluminium, un volume mésoporeux initial mesuré par porosimétrie à l'azote égal à 0,14 ml.g-1, et un paramètre cristallin initial a0 de la maille élémentaire égal à 24,34 Å, mesuré par DRX. 30 g de cette zéolithe USY sont imprégnés à sec avec une solution de nitrate de cobalt de manière à déposer 2,2 % poids de cobalt par rapport au poids de la zéolithe sèche. La zéolithe USY imprégnée est ensuite séchée une nuit à 120°C puis subit un traitement thermique à 450°C pendant 2h précédé de paliers de 1h à 150°C, 250°C et 350°C. Le traitement thermique est fait en utilisant un débit d'air de 2 L.h⁻¹.g⁻¹ de zéolithe. La zéolithe Z5 obtenue présente un rapport atomique global Si/Al = 5,5 et une teneur en Co égal à 2,2 % poids mesurés par fluorescence X par rapport à la masse de zéolithe sèche, une fraction pondérale d'atome d'aluminum extra réseau mesurée par RMN de l'aluminium égale à 39 % poids par rapport à la masse totale de l'aluminium présent dans la zéolithe, un volume mésoporeux mesuré par porosimétrie à l'azote égal à 0,14 ml.g⁻¹, un volume microporeux mesuré par porosimétrie à l'azote égal à 0,28 ml.g⁻¹ et un paramètre cristallin a₀ de la maille élémentaire mesuré par DRX égal à 24,34 Å. Ces caractéristiques sont rappellées dans le Tableau 1.

### Exemple 6 - Préparation de la zéolithe Z6

On considère une zéolithe commerciale USY qui présente un rapport atomique global Si/Al = 5,5 mesuré par fluorescence X, une fraction pondérale d'atome d'aluminum extra réseau initiale égale à 39 % poids par rapport à la masse totale de l'aluminium présent dans la zéolithe et mesurée par RMN de l'aluminium, un volume mésoporeux initial mesuré par porosimétrie à l'azote égal à 0,14 ml.g⁻¹, et un paramètre cristallin initial a₀ de la maille élémentaire égal à 24,34 Å, mesuré par DRX.

30 g de cette zéolithe désaluminée sont mélangés avec 300 mL d'une solution d'hydroxyde de sodium (NaOH) 0,1N à 60°C pendant 30min. Après refroidissement rapide dans l'eau glacée, la suspension est ensuite filtrée et la zéolithe est lavée à 50°C et séchée une nuit à 120°C. La zéolithe Y désaluminée modifiée est ensuite échangée 3 fois par une solution 1N de NH₄NO₃ à une température de 80°C pour obtenir la forme NH₄⁺ partiellement échangée. La zéolithe est finalement calcinée à 450°C pendant 2h sous un flux d'air de 1L.h⁻¹.g⁻¹ de zéolithe.

Cette zéolithe désaluminée et désilicée USY est ensuite imprégnée à sec avec une solution de nitrate de nickel de manière à déposer 2,2 % poids de nickel par rapport au poids de la zéolithe sèche. La zéolithe désaluminée et désilicée USY imprégnée est ensuite séchée une nuit à 120°C puis subit un traitement thermique à 450°C pendant 2h précédé de paliers de 1h à 150°C, 250°C et 350°C. Le traitement thermique est fait en utilisant un débit d'air de 2 L.h⁻¹.g⁻¹ de zéolithe.

La zéolithe Z6 obtenue présente un rapport atomique global Si/Al = 4,7 et une teneur en Ni égal à 2,1 % poids mesurés par fluorescence X par rapport à la masse de zéolithe sèche, une fraction pondérale d'atome d'aluminum extra réseau mesurée par RMN de l'aluminium égale à 33 % poids par rapport à la masse totale de l'aluminium présent dans la zéolithe, un volume mésoporeux mesuré par porosimétrie à l'azote égal à 0,28 ml.g⁻¹, un volume microporeux mesuré par porosimétrie à l'azote égal à 0,25 ml.g⁻¹ et un paramètre cristallin a₀ de la maille élémentaire mesuré par DRX égal à 24,39 Å. Ces caractéristiques sont rappellées dans le Tableau 1.

**Tableau 1 : Caractérisation des échantillons.**

| Zéolithe | Z1 | Z2 | Z3 | Z4 | Z5 | Z6 |
|---|---|---|---|---|---|---|
| | conforme | Non conforme | Non conforme | Non conforme | Non conforme | conforme |
| Si/AI atomique global (FX) | 5,5 | 13,8 | 5,5 | 13,8 | 5,5 | 4,7 |
| % poids Ni (FX) | 2,2 | 2,2 | 3,6 | 3,5 | 2,2 | 2,1 |
| % poids Al_{VI} (RMN) | 39 | 14 | 39 | 14 | 39 | 33 |
| Vol. mésoporeux en ml.g⁻¹ (BJH) | 0,14 | 0,15 | 0,14 | 0,14 | 0,14 | 0,28 |
| Paramètre de maille a₀ en Å (DRX) | 24,34 | 24,29 | 24,34 | 24,29 | 24,34 | 24,39 |
| Vol. microporeux en ml.g⁻¹ (BJH) | 0,28 | 0,32 | 0,27 | 0,32 | 0,28 | 0,25 |

### Exemple 7 - Préparation des catalyseurs

Les supports de catalyseur selon l'invention contenant les zéolithes Z1 à Z6 sont fabriqués en utilisant 12 g de zéolithe mélangés à 88 g d'une matrice composée de boehmite tabulaire ultrafine ou gel d'alumine commercialisée sous le nom Pural SB3 par la société Condéa Chemie Gmbh. Ce mélange de poudre est ensuite mélangé à une solution aqueuse contenant de l'acide nitrique à 60% poids puis malaxé pendant 30 minutes. S'en suit l'ajout d'une solution aqueuse contenant de l'ammoniaque à 20% poids. Le mélange résultant est alors malaxé pendant 15 minutes puis extrudé. Les extrudés sont ensuite calcinés à 600°C durant 2 heures sous air, le débit de gaz étant de 1,5 L.h⁻¹.g⁻¹ de support.

Les extrudés ainsi préparés contiennent 12% poids de zéolithe Z1 à Z6 comprenant les quantités respectives d'élément nickel comme indiqué dans le tableau 1 ci-dessus, ce qui correspond respectivement à 11,66, 11,66, 11,47, 11,45, 11,64 et 11,68 % poids de zéolithe USY par rapport à la masse totale dudit support. Ils sont ensuite imprégnés à sec par une solution d'un mélange d'oxyde de molybdène, d'hydroxyde de nickel de manière à déposer 13% poids de MoO₃ et 2,7% poids de NiO (sans tenir compte du Ni déjà présent sur la zéolithe). Les extrudés sont alors calcinés sous air à 500°C pendant 2h, le débit de gaz étant de 1 L.h⁻¹.g⁻¹ de catalyseur. Les catalyseurs C1 et C6, conformes à l'invention, et les catalyseurs C2, C3, C4 et C5, non conformes à l'invention, sont ainsi préparés à partir des zéolithes Z1 et Z6, et Z2, Z3, Z4 et Z5, respectivement.

### Exemple 8 : Analyses des catalyseurs

Les catalyseurs C1, C2, C3, C4, C5 et C6 ont été analysés de manière à mettre en évidence la présence de deux phases hydrogénantes distinctes : l'une composée de nickel et déposée sur la zéolithe et l'autre composée de nickel et de molybdène et déposée sur la matrice oxyde alumine.

La méthode employée est la microscopie électronique à transmission équipée d'un spectromètre à dispersion d'énergie X permettant l'identification et la quantification des éléments présents dans les cristaux de la zéolithe.

Pour cela on emploi un microscope électronique à transmission, JEOL 2100 HR équipé d'un spectromètre à dispersion d'énergie JEOL Ex-2300-BU. Les extrudés de catalyseurs sont broyés finement dans un mortier. La poudre est incluse dans de la résine pour réaliser des coupes ultrafines d'épaisseur 700 Å pour les deux catalyseurs. Les coupes produites sont recueillies sur une grille en Cu recouverte d'une membrane C à trous servant de support à la préparation. Ces préparations sont séchées sous une lampe I.R. avant d'être introduites dans le microscope électronique à transmission où elles seront soumises à un vide primaire durant quelques minutes puis à un vide secondaire durant toute l'observation. Le microscope électronique permet de parfaitement identifier les cristaux de zéolithe d'une taille d'environ 0,4 micron dispersés dans la matrice alumine. On procède ensuite à un certain nombre d'analyses locales (de 15 à 20) effectuées sur diverses zones de matrice et sur divers cristaux de zéolithes avec un faisceau sonde de 0,1 micron de diamètre. Le traitement quantitatif du signal permet d'obtenir la concentration relative en % atomique des éléments (hors oxygène).

Le Tableau 2 résume les résultats obtenus pour les catalyseurs décrits dans les exemples ci-dessus.

**Tableau 2 : Analyses EDS des catalyseurs**

| Catalyseur | Zone analysée | Si % at. | Al % at. | Ni(Co) % at. | Mo % at. | Si/AI at./at. | Ni(Co) /Mo at./at. |
|---|---|---|---|---|---|---|---|
| C1 | Zéolithe | 83,3 | 14,4 | 2,3 | 0,2 | 5,8 | - |
| C1 | Alumine | 0,2 | 91,0 | 2,5 | 6,3 | - | 0,4 |
| C2 | Zéolithe | 91,0 | 6,7 | 2,3 | 0,1 | 13,6 | - |
| C2 | Alumine | 0,3 | 91,3 | 2,4 | 6,0 | - | 0,4 |
| C3 | Zéolithe | 81,8 | 14,4 | 3,7 | 0,2 | 5,7 | - |
| C3 | Alumine | 0,1 | 90,9 | 2,6 | 6,4 | - | 0,4 |
| C4 | Zéolithe | 89,4 | 7,0 | 3,5 | 0,1 | 12,8 | - |
| C4 | Alumine | 0,2 | 91,3 | 2,4 | 6,1 | - | 0,4 |
| C5 | Zéolithe | 83,2 | 14,4 | 2,3 | 0,3 | 5,8 | - |
| C5 | Alumine | 0,1 | 91,3 | 2,5 | 6,2 | - | 0,4 |
| C6 | Zéolithe | 79,7 | 17,3 | 2,8 | 0,2 | 4,6 | - |
| C6 | Alumine | 0,3 | 90,7 | 2,6 | 6,4 | - | 0,4 |

On observe dans le tableau 2 que tous les catalyseurs possèdent du nickel supporté sur les cristaux de zéolithe Y ou du cobalt pour C5. Le molybdène, qui est introduit lors de l'imprégnation à sec des extrudés de support, ne se trouve qu'exclusivement sur l'alumine. La méthode de préparation permet donc bien d'avoir sur le catalyseur final, à la fois du nickel, ou du cobalt pour le catalyseur C5, présent sur la zéolithe et issu de l'imprégnation à sec préalable de la zéolithe, et une seconde phase active comprenant du molybdène et du nickel présents sur l'alumine et issus de l'imprégnation à sec des extrudés de support.

### Exemple 9 : Comparaison des catalyseurs en hydrocraquage d'une molécule modèle, le squalane.

Les catalyseurs dont les préparations sont décrites dans les exemples précédents sont utilisés dans les conditions de l'hydrocraquage à conversion élevée (60-100%). La charge pétrolière est composée d'une molécule modèle, le squalane, d'une molécule azotée, l'aniline, et d'une molécule soufrée, le diméthyle disulfure (DMDS). Ces deux composés permettent de simuler les pressions partielles de H₂S et de NH₃ présentes dans les conditions réelles d'hydrocraquage. Les caractéristiques de la charge sont données dans le Tableau 3.

**Tableau 3 : Caractéristiques de la charge utilisée.**

| | |
|---|---|
| Densité (20/4) | 0,8118 |
| DMDS (% poids) | 1,5 |
| Aniline (% poids) | 0,5 |
| Squalane (% poids) | 98 |

La charge ainsi préparée est injectée dans l'unité de test d'hydrocraquage qui comprend un réacteur en lit fixe, à circulation descendante de la charge, dans lequel est introduit 20 cm³ de catalyseur. Le catalyseur est sulfuré par un mélange Cyclohexane/Toluène/DMDS + aniline jusqu'à 350°C. La charge de test est ensuite injectée sur le catalyseur puis le protocole de test se déroule dans les conditions opératoires données dans le Tableau 4.

**Tableau 4 : Conditions de test des catalyseurs.**

| | |
|---|---|
| Pression totale | 6 Mpa |
| Catalyseur | 20 cm³ |
| Débit d'hydrogène | 20 L/h |
| Débit de charge | 20 cm³/h |

La température est ajustée pour obtenir 70% de conversion brute sur le catalyseur. Les performances catalytiques sont exprimées par la température qui permet d'atteindre ce niveau de conversion brute de 70% et par le rendement en distillats moyens (kérosène + gazole).

La conversion brute CB est prise égale à :
CB = % poids de 370°C moins de l'effluent
avec "370°C moins" représentant la fraction, distillée à une température inférieure ou égale à 370°C.

Le rendement en kérosène (150-250), est égal au % poids de composés ayant un point d'ébullition compris entre 150 et 250°C dans les effluents. Le rendement en gazole (250-370) est égal au % poids de composés ayant un point d'ébullition compris entre 250 et 370°C dans les effluents. Le rendements en distillats moyens, noté ci-dessous Rdt DM, est égal à la somme de ces deux rendements.

Dans le Tableau 5, nous avons reporté la température de réaction et le rendement en distillats moyens pour les catalyseurs décrits dans les exemples ci-dessus.

**Tableau 5 : Activités catalytiques des catalyseurs en hydrocraquage.**

| | T (°C) à 70% conversion | Rdt DM (% poids) |
|---|---|---|
| C1 conforme (préparé à partir de Z1) | 348 | 64,1 |
| C2 non-conforme (préparé à partir de Z2) | 352 | 63,4 |
| C3 non-conforme (préparé à partir de Z3) | 349 | 62,4 |
| C4 non-conforme (préparé à partir de Z4) | 353 | 61,1 |
| C5 non-conforme (préparé à partir de Z5) | 353 | 57,8 |
| C6 conforme (préparé à partir de Z6) | 348 | 64,9 |

Les catalyseurs C1 et C6 préparé par le procédé conformes à l'invention préparés à partir des zéolithes Z1 et Z6 permettent d'obtenir à la fois une activité et une sélectivité en distillats moyens (kérosène + gazole) améliorées par rapport aux catalyseurs C2, C3, C4 et C5 non conformes à l'invention, respectivement préparés à partir des zéolithes Z2, Z3 et Z4 qui présentent soit un rapport global Si/Al supérieur à celui requis selon la présente invention c'est à dire supérieur à 10 dans le cas de Z2, soit une teneur en Ni supérieur à celle requise, c'est à dire supérieur à 3% dans le cas de Z3, soit les deux dans le cas de Z4, mais également par rapport au catalyseur non conforme C5 préparé à partir de la zéolithe Z5 qui a été imprégnée par du cobalt et non par du nickel comme cela est requis par l'invention. Ces résultats montrent que l'utilisation d'une zéolithe désaluminée USY présentant des caractéristiques texturales bien particulières, en particulier un rapport atomique global de silicium sur aluminium compris entre 3 et 10, liée à la présence conjointe d'une fonction hydrogénante déposée sur la matrice et d'une fonction hydrogénante constituée de nickel déposée sur ladite zéolithe, en particulier une quantité d'élément nickel comprise entre 0,5 et 3% poids par rapport à la masse totale de la zéolithe permettent d'obtenir une augmentation du rendement et de la sélectivité en distillats moyens par rapport à des catalyseurs de l'art antérieur comprenant des zéolithes ne satisfaisant pas aux conditions requises.

## Revendications

1. Procédé de préparation d'un catalyseur comprenant au moins un élément hydro-déshydrogénant choisi dans le groupe formé par les éléments du groupe VIB et du groupe VIII non noble pris seul ou en mélange de la classification périodique, et un support comprenant l'alumine et au moins une zéolithe désaluminée USY, ledit procédé comprenant les étapes suivantes :
b) dépôt sur ladite zéolithe désaluminée de l'élément nickel dans une quantité comprise entre 0,8 et 3% poids par rapport à la masse totale de la zéolithe,
ladite zéolithe désaluminée USY présentant un rapport atomique global de silicium sur aluminium compris entre 2,5 et 10, une fraction pondérale d'atomes d'aluminium extra réseau supérieure à 20%, par rapport à la masse totale de l'aluminium présent dans la zéolithe, un volume mésoporeux mesuré par porosimétrie à l'azote supérieur à 0,07 ml.g⁻¹, un volume microporeux mesuré par porosimétrie à l'azote supérieur à 0,20 ml.g⁻¹ et un parametre cristallin a₀ de la maille élémentaire supérieur à 24,28 Å, la fraction pondérale d'atomes d'aluminium extra réseaux étant déterminée à partir d'une analyse RMN-MAS du solide ²⁷Al sur un spectromètre Bruker de type Avance 400 MHz à l'aide d'une sonde 4 mm;
c) mise en forme du mélange de ladite zéolithe désaluminée comprenant le nickel obtenue à l'issue de l'étape b) avec l'alumine pour obtenir le support ;
d) introduction d'au moins un élément hydro-déshydrogénant par imprégnation du support avec au moins un composé dudit élément,
e) séchage et calcination du produit final obtenu,
le catalyseur obtenu présentant une phase active hydrogénante déposée sur ladite zéolithe USY, lors de l'étape b), uniquement constituée de nickel.

2. Procédé de préparation selon la revenidcation 1 dans lequel l'élément nickel est déposé sur ladite zéolithe désaluminée USY soit par la technique de l'imprégnation à sec, soit par la technique de l'échange cationique.

3. Procédé de préparation selon l'une des revendications 1 à 2 dans lequel l'étape b) est suivie d'un séchage et/ou d'une calcination ou d'une calcination sans séchage préalable.

4. Procédé de préparation selon la revendication 3 dans lequel le séchage est réalisé à une température comprise entre 60 et 250°C et la calcination à une température de 250 à 800°C pendant une durée comprise entre 30 minutes et 6 heures.

5. Procédé de préparation selon l'une des revendications 1 à 4 dans lequel une quantité d'élément nickel comprise entre 1,2 et 3% poids par rapport à la masse totale de la zéolithe est déposée par sur ladite zéolithe désaluminée à l'étape b).

6. Procédé de préparation selon l'une des revendications 1 à 5 dans lequel la teneur en métal du groupe VIB est comprise, en pourcentage d'oxyde de l'élément, entre 5 et 40 % en poids par rapport à la masse totale dudit catalyseur et la teneur en métal non noble du groupe VIII est comprise, en pourcentage d'oxyde de l'élément, entre 0,5 et 10 % en poids par rapport à la masse totale dudit catalyseur, la teneur en élément nickel déposée sur la zéolithe désaluminée USY n'étant pas comprise dans ladite teneur en métal non noble du groupe VIII.

## Patentansprüche

1. Verfahren zur Herstellung eines Katalysators enthaltend mindestens ein hydrierendes-dehydrierendes Element ausgewählt aus der Gruppe gebildet durch die Elemente der Gruppe VIB und der nicht-edlen Gruppe VIII des Periodensystems der Elemente einzeln oder in Mischung und einen Träger aufweisend Aluminiumoxid und wenigstens einen dealuminierten Zeolith USY, wobei das Verfahren die folgenden Schritte aufweist:
b) Abscheiden von Nickel auf dem dealuminierten Zeolith in einer Menge enthalten zwischen 0,8 und 3 Gew.-% im Verhältnis zur Gesamtmasse des Zeolithen, wobei der dealiminierte Zeolith USY ein Gesamtatomverhältnis von Silizium zu Aluminium zwischen 2,5 und 10 aufweist, und ein Atomgewichtsanteil von zusätzlichem Netzwerk-Aluminium von größer 20% im Verhältnis zur Gesamtmasse des im Zeolith vorhandenen Aluminiums aufweist, ein mit Stickstoffporosimetrie gemessenes Mesoporenvolumen von größer 0,07 ml/g, ein mit Stickstoffporosimetrie gemessenes Microporenvolumen von größer 0,20 ml/g und ein Kristallitätsparameter a₀ der Elementarzelle von größer als 24,28 Å aufweist, wobei der Atomgewichtsanteil des zusätzlichen Neztwerk-Aluminiums bestimmt wird mittels einer RMN-MAS Analyse des festen ²⁷Al in einem Bruker Spektrometer vom Typ Avance 400MHz mit Hilfe einer 4 mm Sonde;
c) Formen einer Mischung des genannten, Nickel umfassenden, dealuminierten Zeolith erhalten am Ausgang des Schrittes b) mit einem Aluminiumoxid um den Träger zu erhalten;
d) Einführen wenigstens eines hydrierend-dehydrierenden Elements mittels Imprägnation des Trägers mit wenigstens einer Verbindung dieses Elements,
e) Trocknen und Kalzinieren des zuletzt erhaltenen Produkts, wobei der erhaltende Katalysator eine, ausschließlich aus Nickel gebildetete, aktive hydrierende Phase aufweist, die in Schritt b) auf dem Zeolith USY abgeschieden wurde.

2. Verfahren gemäß Anspruch 1, bei dem das Element Nickel auf dem desaluminierten Zeolith USY mittels Trockenimprägnation oder mittels Kationenaustausch abgeschieden wird.

3. Verfahren gemäß einem der Ansprüche 1 bis 2, bei dem Schritt b) gefolgt wird von einer Trocknung und/oder einer Kalzinierung oder einer Kalzinierung ohne vorheriger Trocknung.

4. Verfahren gemäß Anspruch 3, bei dem die Trocknung bei einer Temperatur zwischen 60 und 250 °C durchgeführt wird und die Kalzinierung bei einer Temperatur zwischen 250°C und 800°C für eine Dauer zwischen 30 Minuten und 6 Stunden.

5. Verfahren gemäß einem der Ansprüche 1 bis 4, bei dem eine Menge an Nickel zwischen 1,2 und 3 Gew.-% im Verhältnis zur Gesamtmasse des Zeolithen auf dem dealuminierten Zeolith in Schritt b) abgeschieden wird.

6. Verfahren gemäß einem der Ansprüche 1 bis 5, bei dem der Gehalt an Metal der Gruppe VIB zwischen 5 und 40 Gew.-%, ausgedrückt in Anteilen des Oxids des Elements, im Verhältnis zur Gesamtmasse des Katalysators beträgt, und der Gehalt an nicht-edlem Metall der Gruppe VIII zwischen 0,5 und 10 Gew.-%, ausgedrückt in Anteilen des Oxids des Elements, beträgt und der Gehalt an auf dem dealuminierten Zeolith USY abgeschiedenem Nickel nicht in dem genannten Gehalt an nicht-edlem Metall der Gruppe VIII enthalten ist.

## Claims

1. Process for the preparation of a catalyst comprising at least one hydro-dehydrogenating element selected from the group comprising elements of group VIB and of non-precious group VIII of the periodic table, used alone or mixed, and a support comprising the alumina and at least one dealuminated USY zeolite, said process comprising the following stages:
b) deposition on said dealuminated zeolite of the element nickel in a quantity comprised between 0.8 and 3% by weight relative to the total mass of the zeolite,
said dealuminated USY zeolite having an overall silicon-to-aluminium atomic ratio comprised between 2.5 and 10, a fraction by weight of extra-network aluminium atom greater than 20% relative to the total mass of the aluminium present in the zeolite, a mesopore volume measured by nitrogen porosimetry greater than 0.07 ml.g⁻¹, a micropore volume measured by nitrogen porosimetry greater than 0.20 ml.g⁻¹ and a crystal parameter a₀ of the elemental mesh greater than 24.28 Å, the fraction by weight of extra-network aluminium atom being determined from a NMR-MAS analysis of the solid-state ²⁷Al on a Brücker Avance 400 MHz spectrometer using a 4-mm probe
c) shaping of the mixture of said dealuminated zeolite comprising the nickel obtained at the end of stage b) with the alumina in order to obtain the support;
d) introduction of at least one hydro-dehydrogenating element by impregnation of the support with at least one compound of said element,
e) drying and calcination of the final product obtained.
the obtained catalyst having a hydrogenating active phase deposited on said USY zeolite, during stape b), only constituted of nickel.

2. Preparation process according to claim 1 in which the element nickel is deposited on said dealuminated USY zeolite either by the dry impregnation technique, or by the cation exchange technique.

3. Preparation process according to one of claims 1 to 2 in which stage b) is followed by drying and/or calcination or by calcination without drying beforehand.

4. Preparation process according to claim 3 in which the drying is carried out at a temperature comprised between 60 and 250°C and the calcination at a temperature of 250 to 800°C for a duration comprised between 30 minutes and 6 hours.

5. Preparation process according to one of claims 1 to 4 in which a quantity of the element nickel comprised between 1.2 and 3% by weight relative to the total mass of the zeolite is deposited on said zeolite dealuminated in stage b).

6. Preparation process according to one of claims 1 to 5 in which the content of metal of group VIB is comprised, in percentage of oxide of the element, between 5 and 40% by weight relative to the total mass of said catalyst and the content of non-precious metal of group VIII is comprised, in percentage of oxide of the element, between 0.5 and 10% by weight relative to the total mass of said catalyst, the content of the element nickel deposited on the dealuminated USY zeolite not being comprised in said content of non-precious metal of group VIII.
